# EUROPÄISCHE PATENTSCHRIFT

(11) **EP 3 467 363 B1**
(45) Veröffentlichungstag und Bekanntmachung des Hinweises auf die Patenterteilung: **23.09.2020**
(21) Anmeldenummer: 18198227.3
(22) Anmeldetag: 02.10.2018
(51) Int. Cl.: F16K 31/56, F16K 11/044, F16K 31/00, E03C 1/048, F24D 17/00

(54) **VENTILANORDNUNG UND SANITÄRANLAGE**
VALVE ASSEMBLY AND SANITARY STATION
DISPOSITIF DE VANNE ET INSTALLATION SANITAIRE

(30) Priorität: 09.10.2017 DE 102017123429
(43) Veröffentlichungstag der Anmeldung: 10.04.2019
(73) Patentinhaber: Grohe AG, 58675 Hemer (DE)
(72) Erfinder: Mainka, David, 58640 Iserlohn (DE); Riedel, Björn, 44879 Bochum (DE); Vorel, Thomas, 59757 Arnsberg (DE)

(56) Entgegenhaltungen:
- EP-A1- 1 669 650
- DE-U1- 29 805 921
- US-A- 6 029 686
- US-A1- 2016 201 305

## Beschreibung

Die vorliegende Erfindung betrifft eine Ventilanordnung zur temperaturabhängigen Wasserführung, insbesondere für eine Sanitäranlage, mit einem Gehäuse, einem Gehäuseeinlass für Mischwasser, einem ersten Gehäuseauslass, einem zweiten Gehäuseauslass, einem Kanalsystem, zumindest einem im Kanalsystem angeordneten Ventil, und einem mechanischen Schaltmechanismus, der zwischen einer ersten Schaltstellung, in der der Gehäuseeinlass mit dem ersten Gehäuseauslass verbunden ist, und einer zweiten Schaltstellung, in der der Gehäuseeinlass mit dem zweiten Gehäuseauslass verbunden ist, schaltbar ist, wobei der Schaltmechanismus ein temperaturgesteuertes Schaltelement umfasst, das zum Umströmen mit Mischwasser zumindest teilweise im Kanalsystem angeordnet ist und derart ausgebildet ist, dass dieses bei Erreichen der Schwelltemperatur den Schaltmechanismus automatisch von der zweiten in die erste Schaltstellung schaltet.

Ferner betrifft die Erfindung eine Sanitäranlage mit einer Thermostat-Brausebatterie, einer Brausegarnitur und einer zwischen diesen angeordneten Ventilanordnung.

Eine Ventilanordnung gemäß dem Oberbegriff des Anspruchs 1 ist aus der EP1669650A1 bekannt. Aus der EP 1 608 824 B1 ist ein Steuerventil bekannt, bei welchem Mischwasser in Abhängigkeit der Wassertemperatur durch unterschiedliche Gehäuseausgänge geleitet wird. Die Steuerung ist dauerhaft aktiviert, so dass dem Anwender nicht die Wahl bleibt, ob er das Wasser unabhängig von seiner Temperatur trotzdem verwenden möchte.

Aufgabe der vorliegenden Erfindung ist es somit, eine Ventilanordnung zu schaffen, bei welcher der Anwender auf Wunsch eine temperaturgesteuerte Wasserumstellung aktivieren kann.

Die der Erfindung zugrundeliegende Aufgabe wird durch die Merkmale der unabhängigen Patentansprüche gelöst. Weitere vorteilhafte Ausgestaltungen ergeben sich aus den Unteransprüchen und den Zeichnungen.

Vorgeschlagen wird eine Ventilanordnung zur temperaturabhängigen Wasserführung, insbesondere für eine Sanitäranlage. Die Ventilanordnung weist ein Gehäuse mit einem Gehäuseeinlass, einem ersten Gehäuseauslass und einem zweiten Gehäuseauslass auf. Durch den Gehäuseeinlass kann Mischwasser in das Gehäuse der Ventilanordnung geleitet werden. Der erste Gehäuseauslass ist für Mischwasser mit einer über einer Schwelltemperatur liegenden Wassertemperatur vorgesehen. Der zweite Gehäuseauslass ist für Mischwasser mit einer unter der Schwelltemperatur liegenden Wassertemperatur. Die Schwelltemperatur ist vorzugsweise eine einstellbare Temperatur, welche das Mischwasser aufweisen soll, wenn es dem Anwender durch den ersten Gehäuseauslass zur Verfügung gestellt wird.

Ferner umfasst die Ventilanordnung ein Kanalsystem, das den Gehäuseeinlass mit den beiden Gehäuseauslässen verbindet. In dem Kanalsystem ist zumindest ein Ventil angeordnet. Die Ventilanordnung weist einen mechanischen Schaltmechanismus zum Schalten des zumindest einen Ventils auf. Der Schaltmechanismus ist zwischen einer ersten Schaltstellung und einer zweiten Schaltstellung umschaltbar. In der ersten Schaltstellung ist der Gehäuseeinlass mit dem ersten Gehäuseauslass verbunden. In der zweiten Schaltstellung ist der Gehäuseeinlass mit dem zweiten Gehäuseauslass verbunden. Der Schaltmechanismus umfasst ein temperaturgesteuertes Schaltelement, das zum Umströmen mit Mischwasser zumindest teilweise im Kanalsystem angeordnet ist. Der Schaltmechanismus ist derart ausgebildet, dass dieser bei Erreichen der Schwelltemperatur automatisch von der zweiten in die erste Schaltstellung schaltet. Der Schaltmechanismus umfasst ein Betätigungselement, mittels dem dieser manuell von einem Benutzer in die zweite Schaltstellung schaltbar ist.

Die Ventilanordnung weist somit eine autonom arbeitende und temperaturgesteuerte Ventilumstellung auf, die mittels des Betätigungselements aktiviert wird. Wenn die eingestellte Schwelltemperatur erreicht ist, erfolgt die Rückstellung des wenigstens einen Ventils von dem zweiten Gehäuseauslass zum ersten Gehäuseauslass vorzugsweise durch das temperaturgesteuerte Schaltelement. Das wenigstens eine Ventil steuert den Fluss des Mischwassers durch das Kanalsystem und den ersten und zweiten Gehäuseauslass. Das Schaltelement reagiert vorzugsweise impulsartig, so dass der Schaltmechanismus von der zweiten Schaltstellung in die erste Schaltstellung geschalten wird. Dem Anwender steht hierdurch ab der Betätigung des Betätigungselements ausschließlich warmes Wasser zur Verfügung, so dass der Komfort erhöht wird. Das durch den zweiten Gehäuseauslass abgeleitete Wasser wird vorzugsweise entweder wieder in die Mischkartusche eingespeist oder beispielsweise für alternative Anwendungen bereitgestellt. Die Funktion ist vollständig ohne elektrische Bauteile möglich, so dass die Ventilanordnung autonom und ohne Stromquelle betrieben werden kann.

Von Vorteil ist es, wenn das Betätigungselement stabförmig ausgebildet ist. Zusätzlich oder alternativ ist es von Vorteil, wenn das Betätigungselement ein zumindest in der ersten Schaltstellung aus dem Gehäuse ragendes Betätigungsende aufweist. Das Betätigungselement ist vorteilhafterweise zum manuellen Schalten des Schaltmechanismus in das Gehäuse hineindrückbar.

Es stellt einen Vorteil dar, wenn das Betätigungselement entlang einer Schaltachse zwischen der ersten und zweiten Schaltstellung axialverschiebbar ist.

Das zumindest eine Ventil umfasst einen in Radialrichtung verschiebbaren Ventilkolben. Der Ventilkolben ist radial nach innen zum Betätigungselement hin federbeaufschlagt in eine Schließstellung gedrückt. Alternativ oder zusätzlich weist das Betätigungselement einen mit dem Ventilkolben korrespondierenden Steuerabschnitt zum Öffnen und Schließen des zumindest einen Ventils auf.

Das Betätigungselement weist vorteilhafterweise über die axiale Länge des Steuerabschnitts einen sich in Richtung des Betätigungsendes vergrößernden oder verkleinernden Durchmesser auf. Wenn der Ventilkolben mit dem vergrößerten Durchmesser des Steuerabschnitts in Wirkverbindung steht, ist das Ventil vorzugsweise geöffnet. Wenn der Ventilkolben hingegen mit dem verkleinerten Durchmesser des Steuerabschnitts in Wirkverbindung steht, ist das Ventil vorzugsweise geschlossen, da der Ventilkolben federbeaufschlagt radial in Richtung der Schaltachse gedrückt wird.

Die Ventilanordnung umfasst zumindest ein erstes Ventil und/oder ein zweites Ventil. Das erste Ventil ist vorzugsweise zwischen dem Gehäuseeinlass und dem ersten Gehäuseauslass angeordnet. Das zweite Ventil ist vorzugsweise zwischen dem Gehäuseeinlass und dem zweiten Gehäuseauslass angeordnet. Die beiden Ventile sind vorzugsweise zueinander entlang der Schaltachse versetzt. Prinzipiell kann die Ventilanordnung lediglich ein Ventil aufweisen, welches jeweils entweder den ersten Gehäuseauslass oder den zweiten Gehäuseauslass freigibt oder verschließt.

Das Betätigungselement weist vorteilhafterweise einen mit dem ersten Ventil korrespondierenden ersten und zweiten Steuerabschnitt auf. Der erste Steuerabschnitt verjüngt sich vorzugsweise in Richtung des Betätigungsendes. Vorzugsweise korrespondiert der erste Steuerabschnitt mit dem ersten Ventil. Der zweite Steuerabschnitt korrespondiert vorzugsweise mit dem zweiten Ventil und erweitert sich in Richtung des Betätigungselements. Der erste Steuerabschnitt wird vorzugsweise von einer schmalen Stelle des Betätigungselements ausgehend breiter. Der zweite Steuerabschnitt verjüngt sich vorzugsweise von der breiteren Stelle des ersten Steuerabschnitts ausgehend in Richtung der Schaltachse, insbesondere in Richtung des dem Betätigungsendes gegenüberliegenden Teils des Betätigungselements. Die beiden Steuerabschnitte sind somit im Wesentlichen zueinander versetzt angeordnet. Die beiden Ventile sind jeweils geschlossen, wenn der jeweilige Ventilkolben mit dem verjüngten, schmaleren Bereich des jeweiligen Steuerabschnitts in Wirkverbindung steht und geöffnet, wenn der jeweilige Ventilkolben im breiteren Bereich des Steuerabschnitts mit diesem in Wirkverbindung steht. Vorzugsweise ist jeweils eines der Ventile geschlossen, während das andere Ventil geöffnet ist. Somit kann auf konstruktiv einfache Weise der gewünschte Gehäuseauslass geöffnet oder geschlossen werden.

Es ist von Vorteil, wenn der Schaltmechanismus wenigstens einen Rastmechanismus aufweist. Mittels des Rastmechanismus ist das Betätigungselement in Axialrichtung in der ersten und zweiten Schaltstellung federkraftbeaufschlagt verrastbar. Der Rastmechanismus verhindert, dass das Betätigungselement von der zweiten Schaltstellung in die erste Schaltstellung zurücckehren kann, bevor nicht die erforderliche Temperaturerhöhung eingetreten ist.

Der Rastmechanismus umfasst vorteilhafterweise wenigstens eine Rastvertiefung und einen Rastnocken. Die Rastvertiefung ist am Betätigungselement ausgebildet. Der Rastnocken ist im Gehäuse der Ventilanordnung ausgebildet und korrespondiert mit der Rastvertiefung. Der Rastnocken ist in Radialrichtung nach innen federkraftbeaufschlagt, so dass dieser nach innen in Richtung der Rastvertiefung gedrückt wird. Der Rastmechanismus kann mehrere Rastvertiefungen aufweisen, die in Längsrichtung des Betätigungselements zueinander beabstandet sind. Auf diese Weise kann das Betätigungselement in einer gewünschten Schaltstellung gehalten werden.

Der Schaltmechanismus umfasst vorteilhafterweise ein Federelement, das das Betätigungselement in Richtung der ersten Schaltstellung drückt, wenn diese sich im Zustand der zweiten verrasteten Schaltstellung befindet.

Alternativ oder ergänzend steht das Federelement mit einem Steuerschieber des Betätigungselements in Wirkverbindung, so dass das Federelement gestaucht wird, wenn der Steuerschieber infolge des Hineindrückens des Betätigungselements gemeinsam mit diesem in Axialrichtung bewegt wird.

Von Vorteil ist es, wenn das Schaltelement ein Dehnstoffelement oder eine Formgedächtnisfeder ist. Das Schaltelement steht derart mit dem Betätigungselement in Wirkverbindung, dass dieses bei erreichter Schwelltemperatur eine zur Federkraft des Federelements gleichgerichtete Aktivierungskraft ausübt, durch die das Betätigungselement entriegelt wird.

Es stellt einen Vorteil dar, wenn der Schaltmechanismus ein Schieberelement umfasst. Das Schieberelement ist in Axialrichtung mit dem Schaltelement derart gekoppelt, dass dieses vom Schaltelement in Richtung der ersten Schaltstellung über die Länge eines Aktivierungsweges axialverschiebbar ist. Wenn das Schieberelement sich in Folge der Ausdehnung des Dehnstoffelements über einen bestimmten Weg, insbesondere ca. 1,5 mm, entlang der Schaltachse in Richtung des Betätigungselements bewegt hat, rastet der Rastmechanismus aus. Hierdurch ist das Betätigungselement freigegeben, so dass auch die Steuerabschnitte entsprechend bewegt und damit die Ventile geöffnet bzw. geschlossen werden.

Vorteilhafterweise liegt das Schieberelement mit seiner dem Betätigungselement zugewandten Stirnseite an dem Federelement an. Auf das Federelement wird vorzugsweise über das Schieberelement die Ausdehnung des Dehnstoffelements übertragen. Ab einer gewissen Dehnung und folglich axialen Bewegung des Schieberelements, kann das Federelement den Steuerschieber und somit das Betätigungselement entgegen dem Rastmechanismus entlang der Schaltachse zumindest teilweise aus dem Gehäuse drücken. Der Rastmechanismus wird dadurch gelöst, so dass infolge des Ausfahrens des Betätigungselements die beiden Ventile von der zweiten in die erste Schaltstellung umgeschaltet werden.

Ferner ist es von Vorteil, wenn der Schaltmechanismus eine Einstellschraube zum Einstellen des Aktivierungsweges aufweist, die an einem dem Betätigungselement abgewandten Ende des Schaltelements anliegt. Durch die Einstellschraube kann definiert werden, welcher Temperaturbereich zur Umschaltung der Ventile von der zweiten in die erste Schaltstellung notwendig ist.

Vorgeschlagen wird zudem eine Sanitäranlage mit einer Thermostat-Brausebatterie, einer Brausegarnitur und einer zwischen diesen angeordneten Ventilanordnung. Die Ventilanordnung ist gemäß der vorangegangenen Beschreibung ausgebildet, wobei die genannten Merkmale einzeln oder in beliebiger Kombination vorhanden sein können. Die Sanitäranlage bietet dem Anwender einen deutlich erhöhten Komfort, da bei aktiviertem Schaltmechanismus ausschließlich warmes Mischwasser aus der Sanitäranlage strömt.

Weitere Vorteile der Erfindung sind in den nachfolgenden Ausführungsbeispielen beschrieben. Es zeigen:
- **Figur 1**: eine Ventilanordnung mit einem mechanischen Schaltmechanismus gemäß einer ersten Schaltstellung in einer Schnittdarstellung und
- **Figur 2**: die Ventilanordnung mit dem mechanischen Schaltmechanismus gemäß einer zweiten Schaltstellung in einer Schnittdarstellung.

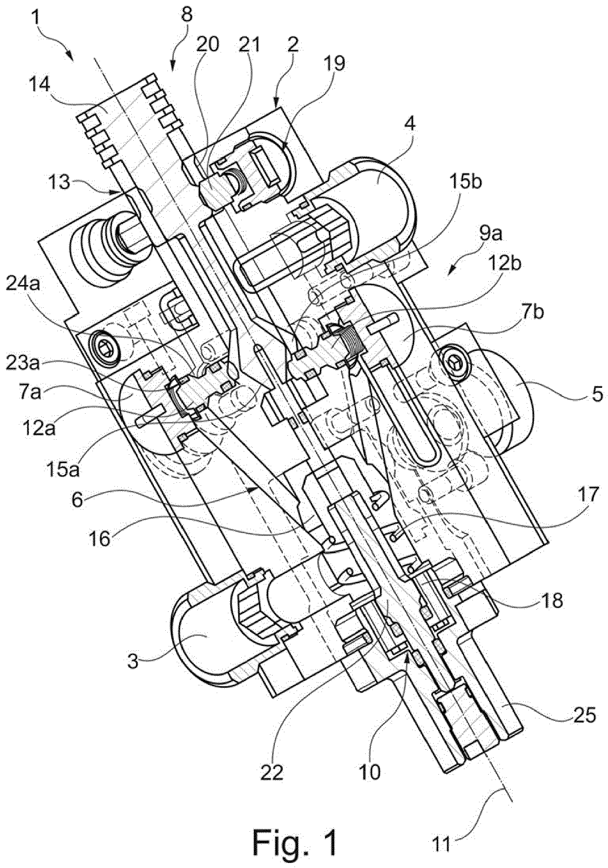

Figur 1 zeigt eine Ventilanordnung 1 zur temperaturabhängigen Wasserführung in einer Schnittdarstellung. Die Ventilanordnung 1 ist ausgebildet, Mischwasser in Abhängigkeit seiner Temperatur an unterschiedliche Abnehmer einer Sanitäranlage zu leiten. Die Ventilanordnung 1 weist ein Gehäuse 2 mit einem Gehäuseeinlass 3 und einem ersten und einem zweiten Gehäuseauslass 4, 5 auf. Der erste Gehäuseauslass 4 kann mit einem Wasserhahn oder einer Brause verbunden sein, so dass das Mischwasser dem Anwender zur Verfügung steht. Der zweite Gehäuseauslass 5 kann mit einem System zur Wiederverwendung des abgeleiteten Wassers verbunden sein.

Durch den Gehäuseeinlass 3 kann Mischwasser in das Gehäuse 2 der Ventilanordnung 1 einströmen. Der Gehäuseeinlass 3 kann mit einer Mischkartusche verbunden sein, von welcher Mischwasser in den Gehäuseeinlass 3 geleitet wird. In der Mischkartusche wird vorzugsweise warmes und kaltes Wasser vermischt, um eine gewünschte Wassertemperatur einzustellen. Üblicherweise liegt zwischen dem Betätigen der Sanitäranlage und dem Erreichen der Schwelltemperatur eine Zeitverzögerung, so dass zunächst Mischwasser mit einer unter der Schwelltemperatur liegenden Wassertemperatur in die Ventilanordnung 1 geleitet wird. Die Ventilanordnung 1 ist derart ausgebildet, dass das Mischwasser mit einer unter der Schwelltemperatur liegenden Wassertemperatur durch den zweiten Gehäuseauslass 5 geleitet wird. Wenn die Wassertemperatur des Mischwassers die Schwelltemperatur erreicht hat, insbesondere über dieser liegt, wird das Wasser durch den ersten Gehäuseauslass 4 aus dem Gehäuse 2 geleitet.

Die Ventilanordnung 1 weist ferner ein Kanalsystem 6 auf, das den Gehäuseeinlass 3 mit den beiden Gehäuseauslässen 4, 5 verbindet. In dem Kanalsystem 6 ist wenigstens ein Ventil 7a, 7b angeordnet, welches ausgebildet ist, den zweiten Gehäuseauslass 5 zu öffnen, wenn die Wassertemperatur des Mischwassers unter der Schwelltemperatur liegt, und zeitgleich den ersten Gehäuseauslass 4 zu schließen.

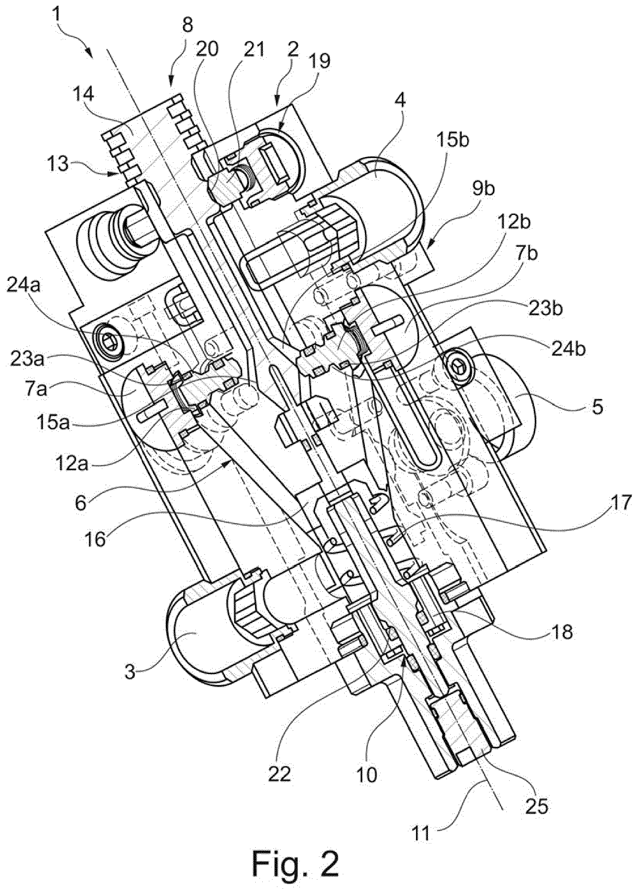

Das Ventil 7a, 7b wird von einem mechanischen Schaltmechanismus 8 ausgelöst. Der Schaltmechanismus 8 ist zwischen einer ersten Schaltstellung 9a und einer zweiten Schaltstellung 9b umschaltbar, welche in Figur 2 dargestellt ist. In der ersten Schaltstellung 9a wird das Mischwasser durch den ersten Gehäuseauslass 4 aus dem Gehäuse 2 geleitet. In der zweiten Schaltstellung 9b wird das Mischwasser mit einer Wassertemperatur unterhalb des Schwellwerts aus dem zweiten Gehäuseauslass 5 geleitet. Die Umschaltung des Schaltmechanismus 8 erfolgt über ein temperaturgesteuertes Schaltelement 10. Das Schaltelement 10 ist in dem Kanalsystem 6 angeordnet, so dass es vom Mischwasser umströmt wird und somit die Wassertemperatur erfassen kann. Wenn das Mischwasser die Schwelltemperatur erreicht, schaltet das Schaltelement 10 den Schaltmechanismus 8 automatisch von der zweiten Schaltstellung 9b in die erste Schaltstellung 9a um.

In Figur 1 weist die Ventilanordnung 1 mehrere Ventile 7a, 7b auf, vorzugsweise jeweils zwei Ventile 7a, 7b, insbesondere eines je Gehäuseauslass 4, 5. Folgend wird der prinzipielle Aufbau eines ersten Ventils 7a zum Öffnen und Schließen des ersten Gehäuseauslasses 4 und eines zweiten Ventils 7b zum Öffnen und Schließen des zweiten Gehäuseauslasses 5 beschrieben. Grundlegend kann die Ventilanordnung 1 lediglich ein Ventil 7a, 7b oder mehrere, vorzugsweise zwei oder vier, Ventile 7a, 7b aufweisen. Die Funktionsweise bleibt von der Anzahl der Ventile 7a, 7b unbeeinflusst.

Das erste Ventil 7a ist zwischen dem Gehäuseeinlass 3 und dem ersten Gehäuseauslass 4 und das zweite Ventil 7b zwischen dem Gehäuseeinlass 3 und dem zweiten Gehäuseauslass 5 angeordnet. Die beiden Ventile 7a, 7b sind entlang einer Schaltachse 11 zueinander versetzt angeordnet. Die beiden Ventile 7a, 7b weisen jeweils einen in Radialrichtung verschiebbaren Ventilkolben 12a, 12b auf. Der Ventilkolben 12b ist radial nach innen zur Schaltachse 11 hin federbeaufschlagt in eine Schließstellung gedrückt. Der Ventilkolben 12a ist in einer Offenstellung positioniert.

Der Schaltmechanismus 8 umfasst ferner ein Betätigungselement 13, mittels dem der Schaltmechanismus 8 manuell in die zweite Schaltstellung 9b schaltbar ist. Zur Aktivierung der Ventilanordnung 1, insbesondere der temperaturgesteuerten Umstellung der Ventile 7a, 7b, kann ein Betätigungsende 14 des Betätigungselements 13 in das Gehäuse 2 gedrückt werden. Das Betätigungsende 14 ragt aus dem Gehäuse 2 hinaus, so dass es dem Benutzer zur Bedienung zugänglich ist. Das Betätigungselement 13 wird entlang der Schaltachse 11 verschoben, um die Schaltstellung 9a, 9b zu ändern.

Zum Öffnen und Schließen der beiden Ventile 7a, 7b weist das Betätigungselement 13 einen ersten und einen zweiten Steuerabschnitt 15a, 15b auf. Die beiden Steuerabschnitte 15a, 15b sind im Wesentlichen im Querschnitt V-förmig ausgebildet. Die beiden Steuerabschnitte 15a, 15b verjüngen sich in Richtung des Betätigungselements 13. Das Zusammenspiel der beiden Ventile 7a, 7b mit den jeweils zugeordneten Steuerabschnitten 15a, 15b wird in der Beschreibung der Figur 2 erläutert.

Das Betätigungselement 13 umfasst ferner einen Steuerschieber 16. Das Betätigungselement 13 ist einteilig mit dem Steuerschieber 16 ausgebildet oder steht mit diesem in Wirkverbindung. Der Steuerschieber 16 und das Betätigungselement 13 sind im Wesentlichen stabförmig ausgebildet und erstrecken sich entlang der Schaltachse 11 der Ventilanordnung 1. Das Betätigungselement 13 ist an seinem dem Betätigungsende 14 abgewandten Seite mit dem Steuerschieber 16 verbunden. Der Steuerschieber 16 ist entlang der Schaltachse 11 beweglich angeordnet. Der Schaltmechanismus 8 umfasst ein Federelement 17. Der Steuerschieber 16 ist an seiner dem Betätigungselement 13 abgewandten Seite mit dem Federelement 17 verbunden. Wenn das Betätigungselement 13 entlang der Schaltachse 11 in das Gehäuse 2 gedrückt wird, bewegt sich auch der Steuerschieber 16 in die gleiche Richtung. Das Federelement 17 liegt auf seiner dem Steuerschieber 16 gegenüberliegenden Seite auf einem Schieberelement 18 auf. Das Federelement 17 wird von dem Steuerschieber 16 gegen das Schieberelement 18 gedrückt, wenn das Betätigungselement 13 in das Gehäuse 2 gedrückt wird, so dass das Federelement 17 gestaucht ist.

Damit das Federelement 17 das Betätigungselement 13 durch die Federkraft bei aktiviertem Schaltmechanismus 8 nicht zurück in die erste Schaltstellung 9a gemäß der Figur 1 drücken kann, weist der Schaltmechanismus 8 einen Rastmechanismus 19 auf. Der Rastmechanismus 19 bewirkt, dass das Betätigungselement 13 in Axialrichtung federbeaufschlagt in der zweiten Schaltstellung 9b gemäß der Figur 2 gehalten werden kann. Hierzu weist der Rastmechanismus 19 wenigstens eine Rastvertiefung 20 auf. Ferner umfasst der Rastmechanismus 19 wenigstens einen mit der Rastvertiefung 20 korrespondierenden Rastnocken 21. Der Rastnocken 21 ist federbeaufschlagt, so dass er nach innen, in Richtung der Schaltachse 11, und entgegen der Federbeaufschlagung in die Rastvertiefung 20 gedrückt werden kann, wenn das Betätigungselement 13 aktiviert wird (vgl. Fig. 2).

Wenn das Betätigungselement 13 in das Innere des Gehäuses 2 gedrückt wird, rastet die Rastnocke 21 in die Rastvertiefung 20 des Betätigungselements 13 ein, so dass das Betätigungselement 13 in der zweiten Schaltstellung 9b gehalten ist (vgl. Fig. 2).

Das Schaltelement 10 ist als ein Dehnstoffelement 22 ausgebildet, welches den Rastmechanismus 19 zu lösen vermag. Das Dehnstoffelement 22 ist mit dem Schieberelement 18 gekoppelt, auf welchem das Federelement 17 aufliegt. Das Dehnstoffelement 22 ist derart angeordnet, dass es, wenn Mischwasser durch das Kanalsystem 6 strömt, dauerhaft von diesem umspült wird. Das Dehnstoffelement 22 erfasst auf diese Weise die Wassertemperatur. In Abhängigkeit der Wassertemperatur dehnt sich das Dehnstoffelement 22 vorzugsweise im Bereich von 15 Grad bis 40 Grad Wassertemperatur um ca. 1,5 mm. Die Funktionsweise bei aktivierter temperaturgesteuerter Umstellung wird folgend in Verbindung mit Figur 2 beschrieben. Ferner kann das Schaltelement 10 eine Formgedächtnislegierung in Form einer Formgedächtnisfeder sein.

In Figur 1 strömt das Wasser durch den Gehäuseeinlass 3 in das Gehäuse 2 ein und umspült sodann das Dehnstoffelement 22. Von dort wird das Wasser durch das erste Ventil 7a, insbesondere durch einen Bereich zwischen dem Ventilkolben 12a und dem Gehäuse 2, geleitet. Das Mischwasser wird von dem ersten Ventil 7a zum ersten Gehäuseauslass 4 und dort aus dem Gehäuse 2 der Ventilanordnung 1 geleitet. Wenn das Betätigungselement 13 nicht in der zweiten Schaltstellung 9b angeordnet ist, wird das Mischwasser unabhängig von seiner Wassertemperatur durch den ersten Gehäuseauslass 4 ausgegeben. Der mechanische Schaltmechanismus 8 ermöglich es dem Anwender zu bestimmen, dass das Mischwasser erst ab einer bestimmten, vorzugsweise einstellbaren, Wassertemperatur durch den ersten Gehäuseauslass 4 zur Verfügung stehen soll.

Bei der nachfolgenden Beschreibung des in Figur 2 dargestellten Ausführungsbeispiels werden für Merkmale, die im Vergleich zum in Figur 1 dargestellten Ausführungsbeispiel in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und Wirkweise der vorstehend bereits beschriebenen Merkmale.

Figur 2 unterscheidet sich von Figur 1 dadurch, dass darin der Schaltmechanismus 8 aktiviert und somit das Betätigungselement 13 in das Gehäuse 2 der Ventilanordnung 1 gedrückt ist. Durch das Drücken des Betätigungsendes 14, wird das Betätigungselement 13 entlang der Schaltachse 11 tiefer in das Gehäuse 2 eingebracht. Der Steuerschieber 16, mit welchem das Betätigungselement 13 im Inneren des Gehäuses 2 verbunden ist, wird durch die Wirkverbindung beider Bauteile ebenso entlang der Schaltachse 11 verschoben. Der Steuerschieber 16 staucht sodann das Federelement 17, auf welchem der Steuerschieber 16 auf seiner dem Betätigungselement 13 gegenüberliegenden Seite aufliegt. Prinzipiell könnte der Steuerschieber 16 einteilig mit dem Betätigungselement 13 ausgebildet sein.

Das Federelement 17 wird durch die Stauchung gegen das Schieberelement 18 des Schaltmechanismus 8 gedrückt. Das Schieberelement 18 ist fest mit dem Dehnstoffelement 22 gekoppelt. Damit der Steuerschieber 16 durch die Federkraft des Federelements 17 nicht zurück in die erste Schaltstellung 9a gedrückt werden kann, rastet mit dem Verschieben des Betätigungselements 13 der Rastmechanismus 19 ein.

In der ersten Schaltposition 9a gemäß Figur 1 ist der Rastmechanismus 19 derart federbeaufschlagt, dass der Rastnocken 21 gegen das Betätigungselement 13 drückt. Wenn das Betätigungselement 13 nun verschoben wird, ändert sich die vertikale Anordnung der Rastvertiefung 20, die am Betätigungselement 13 ausgebildet sind, gegenüber der Rastnocke 21. Wenn die Rastnocke 21 mit der Rastvertiefung 20 in etwa auf gleicher Höhe ist, wird die Rastnocke 21 federbeaufschlag in die Rastvertiefung 20 des Betätigungselements 13 gedrückt. Durch den eingerasteten Rastmechanismus 19 in der zweiten Schaltstellung 9b bleibt das Betätigungselement 13 in seiner eingefahrenen Lage.

Durch das Verschieben des Betätigungselements 13 wird ferner auch die Lage des wenigstens einen Steuerabschnitts 15a, 15b gegenüber dem wenigstens einen Ventil 7a, 7b verändert. In der ersten Schaltposition 9a ist der erste Ventilkolben 12a des ersten Ventils 7a an der breitesten Stelle des sich verjüngenden ersten Steuerabschnitts 15a angeordnet. In dieser Position ist eine erste Dichtung 23a des ersten Ventils 7a von dem Gehäuse 2, insbesondere dem Kanalsystem 6, beabstandet, so dass das Mischwasser durch eine erste Ventilöffnung 24a hindurch dringen kann (vgl. Fig. 1). Durch das Hineindrücken des Betätigungselements 13 verschiebt sich der erste Steuerabschnitt 15a gegenüber dem ersten Ventil 7a, so dass dieses am sich verjüngenden Bereich des ersten Steuerabschnitts 15a anliegt (vgl. Fig. 2). Dabei wird der erste Ventilkolben 12a durch seine Federbeaufschlagung radial nach innen in die Schließstellung gedrückt, in welcher die erste Ventilöffnung 24a geschlossen ist. Die erste Dichtung 23a des ersten Ventils 7a drückt gegen das Gehäuse 2 und die Wandung des Kanalsystems 6, so dass kein Wasser hindurch dringen kann.

Hingegen wird das zweite Ventil 7b von seiner Schließposition in eine Offenposition gedrückt, da das zweite Ventil 7b in der ersten Schaltstellung 9a zunächst an der sich verjüngenden Stelle des zweiten Steuerabschnitts 15b angeordnet ist (vgl. Fig. 1). Während des Einbringens des Betätigungselements 13 verschiebt sich der zweite Steuerabschnitt 15b gegenüber dem zweiten Ventilkolben 12b, so dass dieser entgegen der Federkraft weggedrückt wird, bis dieser an der breitesten Stelle des zweiten Steuerabschnitt 15b anliegt. Hierdurch wird der zweite Ventilkolben 12b gegenüber dem Gehäuse 2 und dem Kanalsystem 6 verschoben, so dass sich eine zweite Dichtung 23b des zweiten Ventils 7b derart bewegt, dass eine zweite Ventilöffnung 24b freigegeben ist.

In der zweiten Schaltstellung 9b wird durch den Gehäuseeinlass 3 strömendes Mischwasser somit bis zu einer bestimmten Schwelltemperatur durch den zweiten Gehäuseauslass 5 aus der Ventilanordnung 1 ausgegeben. Das Mischwasser umströmt dabei dauerhaft das Schaltelement 10 bzw. das Dehnstoffelement 22, welches auf eine Temperaturerhöhung mit einer Ausdehnung reagiert. Wenn die Wassertemperatur steigt dehnt sich das Dehnstoffelement 22 mit der Temperaturerhöhung aus. Die Dehnung kann bis zum Erreichen der Schwelltemperatur in etwa 1,5 mm betragen. Durch die Kopplung des Dehnstoffelements 22 mit dem Schieberelement 18, drückt das Schieberelement 18 das darauf aufliegende Federelement 17 in Richtung des Betätigungselements 13, wenn sich das Dehnstoffelement 22 ausdehnt. Indem die Rastvertiefung 20 gegenüber der Rastnocke 21 verschoben wird, rastet der Rastmechanismus 19 aus. Wenn der Rastmechanismus 19 gelöst ist, fährt das Betätigungselement 13 bzw. das Betätigungsende 14 aus dem Gehäuse 2 aus, so dass die erste Schaltstellung 9a gemäß Figur 1 eingenommen wird. Entsprechend verschieben sich auch die Steuerabschnitte 15a, 15b gegenüber den beiden Ventilen 7a, 7b, so dass die zweite Ventilöffnung 24b des zweiten Ventils 7b wieder verschlossen und die erste Ventilöffnung 24a des ersten Ventils 7a geöffnet wird. Das warme Mischwasser, welches die Schwelltemperatur erreicht hat, kann somit dem Anwender durch den ersten Gehäuseauslass 4 zugeführt werden.

Die Schwelltemperatur kann eingestellt werden, indem durch eine Einstellschraube 25 der Aktivierungsweg des Schaltmechanismus 8 justiert wird. Die Einstellschraube 25 ist vorzugsweise an der dem Betätigungselement 13 gegenüberliegenden Seite der Ventilanordnung 1 angeordnet.

### Bezugszeichenliste

- 1: Ventilanordnung
- 2: Gehäuse
- 3: Gehäuseeinlass
- 4: erster Gehäuseauslass
- 5: zweiter Gehäuseauslass
- 6: Kanalsystem
- 7a: erstes Ventil
- 7b: zweites Ventil
- 8: Schaltmechanismus
- 9a: erste Schaltstellung
- 9b: zweite Schaltstellung
- 10: Schaltelement
- 11: Schaltachse
- 12a: erster Ventilkolben
- 12b: zweiter Ventilkolben
- 13: Betätigungselement
- 14: Betätigungsende
- 15a: erster Steuerabschnitt
- 15b: zweiter Steuerabschnitt
- 16: Steuerschieber
- 17: Federelement
- 18: Schieberelement
- 19: Rastmechanismus
- 20: Rastvertiefung
- 21: Rastnocken
- 22: Dehnstoffelement
- 23a: erste Dichtung
- 23b: zweite Dichtung
- 24a: erste Ventilöffnung
- 24b: zweite Ventilöffnung
- 25: Einstellschraube

## Patentansprüche

1. Ventilanordnung (1) zur temperaturabhängigen Wasserführung, insbesondere für eine Sanitäranlage, mit einem Gehäuse (2), einem Gehäuseeinlass (3) für Mischwasser, einem ersten Gehäuseauslass (4) für Mischwasser mit einer über einer Schwelltemperatur liegenden Wassertemperatur, einem zweiten Gehäuseauslass (5) für Mischwasser mit einer unter der Schwelltemperatur liegenden Wassertemperatur, einem Kanalsystem (6), das den Gehäuseeinlass (3) mit den beiden Gehäuseauslässen (4, 5) verbindet, zumindest einem im Kanalsystem (6) angeordneten Ventil (7a, 7b), und einem mechanischen Schaltmechanismus (8) zum Schalten des zumindest einen Ventils (7a, 7b), der zwischen einer ersten Schaltstellung (9a), in der der Gehäuseeinlass (3) mit dem ersten Gehäuseauslass (4) verbunden ist, und einer zweiten Schaltstellung (9b), in der der Gehäuseeinlass (3) mit dem zweiten Gehäuseauslass (5) verbunden ist, schaltbar ist, wobei der Schaltmechanismus (8) ein temperaturgesteuertes Schaltelement (10) umfasst, das zum Umströmen mit Mischwasser zumindest teilweise im Kanalsystem (6) angeordnet ist und derart ausgebildet ist, dass dieses bei Erreichen der Schwelltemperatur den Schaltmechanismus (8) automatisch von der zweiten in die erste Schaltstellung (9a) schaltet, wobei der Schaltmechanismus (8) ein Betätigungselement (13) umfasst, mittels dem der Schaltmechanismus (8) manuell von einem Benutzer in die zweite Schaltstellung (9b) schaltbar ist, **dadurch gekennzeichnet, dass** das zumindest eine Ventil (7a, 7b) einen in Radialrichtung verschiebbaren Ventilkolben (12a, 12b) umfasst, der radial nach innen zum Betätigungselement (13) hin federbeaufschlagt in eine Schließstellung gedrückt ist.

2. Ventilanordnung nach dem vorherigen Anspruch, **dadurch gekennzeichnet, dass** das Betätigungselement (13) stabförmig ausgebildet ist, ein zumindest in der ersten Schaltstellung (9a) aus dem Gehäuse (2) ragendes Betätigungsende (14) aufweist oder zum manuellen Schalten des Schaltmechanismus (8) in das Gehäuse (2) hineindrückbar ist.

3. Ventilanordnung nach einem der vorherigen Ansprüche, **dadurch gekennzeichnet, dass** das Betätigungselement (13) entlang einer Schaltachse (11) zwischen der ersten und zweiten Schaltstellung (9a, 9b) axialverschiebbar ist.

4. Ventilanordnung nach einem der vorherigen Ansprüche, **dadurch gekennzeichnet, dass** das Betätigungselement (13) einen mit dem Ventilkolben (12a, 12b) korrespondierenden Steuerabschnitt (15a, 15b) zum Öffnen und Schließen des zumindest einen Ventils (7a, 7b) aufweist.

5. Ventilanordnung nach Anspruch **dadurch gekennzeichnet, dass** das Betätigungselement (13) über die axiale Länge des Steuerabschnitts (15a, 15b) einen sich in Richtung des Betätigungsendes (14) vergrößernden oder verkleinernden Durchmesser aufweist.

6. Ventilanordnung nach einem der vorherigen Ansprüche, **dadurch gekennzeichnet, dass** die Ventilanordnung (1) zumindest ein erstes Ventil (7a), das zwischen dem Gehäuseeinlass (3) und dem ersten Gehäuseauslass (4) angeordnet ist, oder zumindest ein zweites Ventil (7b), das zwischen dem Gehäuseeinlass (3) und dem zweiten Gehäuseauslass (5) angeordnet ist, umfasst, die zueinander entlang der Schaltachse (11) vorzugsweise versetzt sind.

7. Ventilanordnung nach einem der vorherigen Ansprüche insofern auf Anspruch 6 bezogen, **dadurch gekennzeichnet, dass** das Betätigungselement (13) einen mit dem ersten Ventil (7a) korrespondierenden und/oder sich in Richtung des Betätigungsendes (14) verjüngenden ersten Steuerabschnitt (15a) und einen mit dem zweiten Ventil (7b) korrespondierenden oder in Richtung des Betätigungselements (13) erweiternden zweiten Steuerabschnitt (15b) aufweist.

8. Ventilanordnung nach einem der vorherigen Ansprüche, **dadurch gekennzeichnet, dass** der Schaltmechanismus (8) wenigstens einen Rastmechanismus (19) aufweist, mittels dem das Betätigungselement (13) in Axialrichtung in der ersten und zweiten Schaltstellung (9a, 9b) federkraftbeaufschlagt verrastbar ist.

9. Ventilanordnung nach einem der vorherigen Ansprüche insofern auf Anspruch 8 bezogen, **dadurch gekennzeichnet, dass** der Rastmechanismus (19) wenigstens eine am Betätigungselement (13) ausgebildete Rastvertiefung (20) und zumindest einen mit der Rastvertiefung (20) korrespondierenden in Radialrichtung nach innen federkraftbeaufschlagten Rastnocken (21) umfasst.

10. Ventilanordnung nach einem der vorherigen Ansprüche, **dadurch gekennzeichnet, dass** der Schaltmechanismus (8) ein Federelement (17) umfasst, das das Betätigungselement (13) bei in der zweiten Schaltstellung (9b) verrastetem Zustand in Richtung der ersten Schaltstellung (9a) drückt,
oder das Federelement (17) mit einem Steuerschieber (16) des Betätigungselements in Wirkverbindung steht, so dass das Federelement (17) gestaucht wird, wenn der Steuerschieber (16) infolge des Hineindrückens des Betätigungselements (13) gemeinsam mit diesem in Axialrichtung bewegt wird.

11. Ventilanordnung nach einem der vorherigen Ansprüche, **dadurch gekennzeichnet, dass** das Schaltelement (10) ein Dehnstoffelement (22) oder eine Formgedächtnisfeder ist und/oder
derart mit dem Betätigungselement (13) in Wirkverbindung steht, dass das Schaltelement (10) bei erreichter Schwelltemperatur eine zur Federkraft des Federelements (17) gleichgerichtete Aktivierungskraft ausübt, durch die das Betätigungselement (13) entriegelbar ist.

12. Ventilanordnung nach einem der vorherigen Ansprüche, **dadurch gekennzeichnet, dass** der Schaltmechanismus (8) ein Schieberelement (18) umfasst, das in Axialrichtung mit dem Schaltelement (10) derart gekoppelt ist, dass dieses vom Schaltelement (10) in Richtung der ersten Schaltstellung (9a) über die Länge eines Aktivierungsweges axialverschiebbar ist.

13. Ventilanordnung nach Anspruch 12, **dadurch gekennzeichnet, dass** das Schieberelement (18) mit seiner dem Betätigungselement (13) zugewandten Stirnseite an dem Federelement (17) anliegt.

14. Ventilanordnung nach einem der vorherigen Ansprüche insofern auf Anspruch 13 bezogen, **dadurch gekennzeichnet, dass** der Schaltmechanismus (8) eine Einstellschraube (25) zum Einstellen des Aktivierungsweges aufweist, die an einem dem Betätigungselement (13) abgewandten Ende des Schaltelements anliegt.

15. Sanitäranlage mit einer Thermostat-Brausebatterie, einer Brausegarnitur und einer zwischen diesen angeordneten Ventilanordnung (1), **dadurch gekennzeichnet, dass** die Ventilanordnung (1) nach einem oder mehreren der vorherigen Ansprüche ausgebildet ist.

## Claims

1. A valve assembly (1) for temperature-dependent water conduction, in particular for a sanitary station, having a housing (2), a housing inlet (3) for mixed water, a first housing outlet (4) for mixed water having a water temperature lying above a threshold temperature, a second housing outlet (5) for mixed water having a water temperature lying below the threshold temperature, a channel system (6) which connects the housing inlet (3) to the two housing outlets (4, 5), at least one valve (7a, 7b) arranged in the channel system (6), and a mechanical switch mechanism (8) for switching the at least one valve (7a, 7b), which is switchable between a first switch position (9a), in which the housing inlet (3) is connected to the first housing outlet (4), and a second switch position (9b), in which the housing inlet (3) is connected to the second housing outlet (5), wherein the switch mechanism (8) comprises a temperature-controlled switch element (10), which is arranged at least partially in the channel system (6) so that mixed water can flow around it and which is configured in such a way that when the threshold temperature is reached, it automatically switches the switch mechanism (8) from the second to the first switch position (9a), wherein the switch mechanism (8) comprises an actuation element (13), by means of which a user can manually switch the switch mechanism (8) to the second switch position (9b), **characterized in that** the at least one valve (7a, 7b) comprises a valve plunger (12a, 12b) capable of being displaced in a radial direction, which is pressed under spring action radially inwardly toward the actuation element (13) into a closed position.

2. The valve assembly according to the preceding claim, **characterized in that** the actuation element (13) is configured as rod-shaped, has a actuation end (14) which projects, at least in the first switch position (9a), from the housing (2) or which can be pushed into the housing (2) for manually switching the switch mechanism (8) .

3. The valve assembly according to any one of the preceding claims, **characterized in that** the actuation element (13) can be slid axially along a switch axis (11) between the first and second switch positions (9a, 9b).

4. The valve assembly according to any one of the preceding claims, **characterized in that** the actuation element (13) has a control section (15a, 15b) corresponding to the valve plunger (12a, 12b) for opening and closing the at least one valve (7a, 7b).

5. The valve assembly according to Claim 4, **characterized in that** the actuation element (13) has a diameter that enlarges or decreases towards the actuation end (14) over the axial length of the control section (15a, 15b).

6. The valve assembly according to any one of the preceding claims, **characterized in that** the valve assembly (1) comprises at least one first valve (7a), which is arranged between the housing inlet (3) and the first housing outlet (4), or at least one second valve (7b), which is arranged between the housing inlet (3) and the second housing outlet (5), which are preferably offset relative to each other along the switch axis (11).

7. The valve assembly according to any one of the preceding claims, insofar as related to Claim 6, **characterized in that** the actuation element (13) has a first control section (15a) corresponding to the first valve (7a) and/or tapering toward the actuation end (14) and a second control section (15b) corresponding to the second valve (7b) or widening toward the actuation element (13).

8. The valve assembly according to any one of the preceding claims, **characterized in that** the switch mechanism (8) has at least one locking mechanism (19), by means of which the actuation element (13) can be locked, under spring tension in an axial direction, in the first and second switch positions (9a, 9b).

9. The valve assembly according to any one of the preceding claims, insofar as related to Claim 8, **characterized in that** the locking mechanism (19) comprises at least one locking recess (20) formed on the actuation element (13) and at least one locking cam (21) spring tensioned radially inwards corresponding to the locking recess (20) .

10. The valve assembly according to any one of the preceding claims, **characterized in that** the switch mechanism (8) comprises a spring element (17), which in the state of being locked in the second switch position (9b) presses the actuation element (13) towards the first switch position (9a),
or the spring element (17) is operatively connected to a control slide (16) of the actuation element such that the spring element (17) is compressed when the control slide (16) is moved conjointly with the actuation element (13) in an axial direction when the latter is pushed in.

11. The valve assembly according to any one of the preceding claims, **characterized in that** the switch element (10) is an expansion material element (22) or a shape memory spring, and/or
is operatively connected to the actuation element (13) in such a way that upon reaching the threshold temperature, the switch element (10) exerts an activation force acting in the same direction as the spring force of the spring element (17), by which the actuation element (13) can be disengaged.

12. The valve assembly according to any one of the preceding claims, **characterized in that** the switch mechanism (8) comprises a slide element (18), which is coupled in an axial direction to the switch element (10) in such a way that the former can be slid axially by the switch element (10) toward the first switch position (9a) over the length of an activation path.

13. The valve assembly according to Claim 12, **characterized in that** the slide element (18) abuts on the spring element (17) with its front side facing the actuation element (13).

14. The valve assembly according to any one of the preceding claims, insofar as related to Claim 13, **characterized in that** the switch mechanism (8) has a set screw (25) for setting the activation path, which abuts on an end of the switch element facing away from the actuation element (13).

15. A sanitary station having a thermostatic shower mixer, a shower set and a valve assembly (1) arranged between these, **characterized in that** the valve assembly (1) is configured according to one or more of the preceding claims.

## Revendications

1. Dispositif de vanne (1), destiné à conduire de l'eau en fonction de la température, destiné notamment à une installation sanitaire, pourvu d'un corps (2), d'une entrée de corps (3) pour de l'eau mitigée, d'une première sortie de corps (4) pour de l'eau mitigée à une température de l'eau supérieure à une température seuil, d'une deuxième sortie de corps (5) pour de l'eau mitigée à une température de l'eau inférieure à la température seuil, d'un système de canalisation (6), lequel relie l'entrée de corps (3) avec les deux sorties de corps (4, 5), d'au moins une vanne (7a, 7b) placée dans un système de canalisation (6), et d'un mécanisme de commutation (8) mécanique, destiné à commuter l'au moins une vanne (7a, 7b), qui est susceptible d'être commuté entre une première position de commutation (9a), dans laquelle l'entrée de corps (3) est reliée avec la première sortie de corps (4) et une deuxième position de commutation (9b), dans laquelle l'entrée de corps (3) est reliée avec la deuxième sortie de corps (5), le mécanisme de commutation (8) comprenant un élément de commutation (10) thermocontrôlé, qui pour être entouré avec de l'eau mitigée est placé au moins en partie dans le système de canalisation (6) et qui est conçu de telle sorte, qu'à l'atteinte de la température seuil, il commute automatiquement le mécanisme de commutation (8) de la deuxième dans la première position de commutation (9a), le mécanisme de commutation (8) comprenant un élément de manœuvre (13), au moyen duquel le mécanisme de commutation (8) est commutable manuellement par un utilisateur dans la deuxième position de commutation (9b), **caractérisé en ce que** l'au moins une vanne (7a, 7b) comprend un piston de vanne (12a, 12b) déplaçable dans la direction radiale, qui sous l'effet d'un ressort est pressé en direction radiale vers l'intérieur, dans une position de fermeture vers l'élément de manœuvre (13).

2. Dispositif de vanne selon la revendication précédente, **caractérisé en ce que** l'élément de manœuvre (13) est conçu en forme de baguette, comporte une extrémité de manœuvre (14) saillant hors du corps (2) au moins dans la première position de commutation (9a) ou pour la commutation manuelle du mécanisme de commutation (8) est susceptible d'être enfoncé dans le corps (2).

3. Dispositif de vanne selon l'une quelconque des revendications précédentes, **caractérisé en ce que** l'élément de manœuvre (13) est déplaçable en direction axiale le long d'un axe de commutation (11) entre la première et la deuxième position de commutation (9a, 9b) .

4. Dispositif de vanne selon l'une quelconque des revendications précédentes, **caractérisé en ce que** l'élément de manœuvre (13) comporte un segment de commande (15a, 15b) correspondant avec le piston de vanne (12a, 12b), pour ouvrir et fermer l'au moins une vanne (7a, 7b).

5. Dispositif de vanne selon la revendication 4, **caractérisé en ce que** l'élément de manœuvre (13) comporte sur la longueur axiale du segment de commande (15a, 15b) un diamètre s'agrandissant ou se rétrécissant dans la direction de l'extrémité de manœuvre (14).

6. Dispositif de vanne selon l'une quelconque des revendications précédentes, **caractérisé en ce que** le dispositif de vanne (1) comporte au moins une première vanne (7a), qui est placée entre l'entrée de corps (3) et la première sortie de corps (4), ou
comporte au moins une deuxième vanne (7b), qui est placée entre l'entrée de corps (3) et la deuxième sortie de corps (5), qui sont décalées de préférence l'une par rapport à l'autre le long de l'axe de commutation (11).

7. Dispositif de vanne selon l'une quelconque des revendications précédentes, dans la mesure où elle se réfère à la revendication 6, **caractérisé en ce que** l'élément de manœuvre (13) comporte un premier segment de commande (15a) correspondant avec la première vanne (7a) et/ou se rétrécissant dans la direction de l'extrémité de manœuvre (14) et un deuxième segment de commande (15b) correspondant avec la deuxième vanne (7b) ou s'élargissant dans la direction de l'élément de manœuvre (13).

8. Dispositif de vanne selon l'une quelconque des revendications précédentes, **caractérisé en ce que** le mécanisme de commutation (8) comporte au moins un mécanisme d'enclenchement (19), au moyen duquel l'élément de manœuvre (13) est susceptible d'être enclenché sous l'effet d'une force de ressort dans la direction axiale dans la première et la deuxième position de commutation (9a, 9b).

9. Dispositif de vanne selon l'une quelconque des revendications précédentes, dans la mesure où elle se réfère à la revendication 8, **caractérisé en ce que** le mécanisme d'enclenchement (19) comporte au moins un creux d'enclenchement (20) conçu sur l'élément de manœuvre (13) et au moins une came d'enclenchement (21) correspondant avec le creux d'enclenchement (20), soumise à la force d'un ressort vers l'intérieur dans la direction radiale.

10. Dispositif de vanne selon l'une quelconque des revendications précédentes, **caractérisé en ce que** le mécanisme de commutation (8) comprend un élément à ressort (17), qui dans la position enclenchée dans la deuxième position de commutation (9b) appuie l'élément de manœuvre (13) dans la direction de la première position de commutation (9a),
ou l'élément à ressort (17) se trouve en liaison active avec un coulisseau de commande (16) de l'élément de manœuvre, de sorte que l'élément à ressort (17) soit comprimé lorsque du fait de l'enfoncement de l'élément de manœuvre (13), le coulisseau de commande (16) est déplacé conjointement avec celui-ci dans la direction axiale.

11. Dispositif de vanne selon l'une quelconque des revendications précédentes, **caractérisé en ce que** l'élément de commutation (10) est un élément en matière expansible (22) ou un ressort à mémoire de forme et/ou
se trouve en liaison active avec l'élément de manœuvre (13), de telle sorte qu'à l'atteinte de la température seuil, l'élément de commutation (10) exerce une force d'activation dirigée à l'identique de la force de ressort de l'élément à ressort (17), par laquelle l'élément de manœuvre (13) est déverrouillable.

12. Dispositif de vanne selon l'une quelconque des revendications précédentes, **caractérisé en ce que** le mécanisme de commutation (8) comprend un élément coulissant (18) qui est couplé dans la direction axiale avec l'élément de commutation (10), de telle sorte qu'il soit déplaçable en direction axiale par l'élément de commutation (10) dans la direction de la première position de commutation (9a), sur la longueur d'un trajet d'activation.

13. Dispositif de vanne selon la revendication 12, **caractérisé en ce que** par sa face frontale dirigée vers l'élément de manœuvre (13), l'élément coulissant (18) est adjacent à l'élément à ressort (17).

14. Dispositif de vanne selon l'une quelconque des revendications précédentes, dans la mesure où elle se réfère à la revendication 13, **caractérisé en ce que** le mécanisme de commutation (8) comporte une vis de réglage (25) pour le réglage du trajet d'activation, qui est adjacente à une extrémité opposée à l'élément de manœuvre (13) de l'élément de commutation.

15. Installation sanitaire, pourvue d'un mitigeur de douche thermostatique, d'un ensemble de douche et d'un dispositif de vanne (1) placé entre ces derniers, **caractérisée en ce que** le dispositif de vanne (1) est conçu selon l'une quelconque ou plusieurs des revendications précédentes.
